# EUROPEAN PATENT APPLICATION

(11) **EP 4 475 009 A1**
(43) Date of publication of application: **11.12.2024**
(21) Application number: 23213137.5
(22) Date of filing: 29.11.2023
(51) Int. Cl.: G06F 16/904, G06F 16/958, G06F 3/0481, G09B 21/00

(54) **METHOD FOR GENERATING TEXTUAL DESCRIPTIONS FOR A DATA CHART AND ENHANCING NAVIGABILITY ON GRAPHICAL INTERFACES**

(30) Priority: 10.06.2023 PT 2023118710; 11.09.2023 PT 2023118909
(71) Applicant: Feedzai - Consultadoria e Inovação Tecnológica, S.A., 3030-199 Coimbra (PT)
(72) Inventor: MARQUES COSTA, RITA, 3030-199 COIMBRA (PT); RAMALHO DUARTE, DIOGO, 3030-199 COIMBRA (PT); SANTOS RODRIGUES BIZARRO, PEDRO GUSTAVO, 3030-199 COIMBRA (PT)
(74) Representative: Patentree

(57) **Abstract**

The present document discloses a computer-implemented method for generating textual descriptions for a data chart, comprising the steps of: composing a text prompt comprising a textual instruction to generate a chart description, a data series description, and data from the data chart converted to text format; sending the composed text prompt to a generative pretrained language model, which in particular implementations comprises a generative pretrained transformer (GPT) language model; receiving from the language model a generated textual description; wherein the data from the data chart comprises an array or arrays of pairwise keys, and corresponding value datapoints. Also disclosed herein is a respective system and a non-transitory storage media including program instructions for enhancing navigability on a graphical user interface.

## Description

### TECHNICAL FIELD

The present disclosure relates to a computer-implemented method for generating textual descriptions for a data chart. The disclosure also includes a computer-implemented method for enhancing navigability, i.e., improving interactivity, on graphical user interfaces (i.e., "GUIs"), in particular, for improving user accessibility.

### BACKGROUND

Improving accessibility of web content for individuals who rely on screen readers or other assistive technologies is an important concern in the computing field of user interfaces. Accessibility can be defined as a quality of a graphical user interface, for example a web page, of being easily reached, interacted with, or used by people who have a disability.

Aria (Accessible Rich Internet Applications) are a set of HTML attributes that are primarily used to improve the accessibility of web content for individuals who rely on screen readers or other assistive technologies. These attributes provide supplemental information to HTML so that interactions can be passed to the assistive technologies when there are no other mechanisms available to do so.

Aria-labels are one of the most commonly used aria attributes. When an aria-label is added to an element, a custom label specific for assistive technology is provided. This ensures that users with visual impairments can understand the purpose or function of the element. However, these labels alone do not make a website accessible, as they rely on decisions made by both designers and developers of a website. In particular, when dealing with elements such as figures or tables, a screen reader cannot alone decipher the information present on a figure, thus needing a previous description stored on the HTML page describing it. For example, when dealing with tables, merged cells pose an extra challenge as the screen reader will wrongfully misinterpret it as a single cell.

A DOM (Document Object Model) structure in a website refers to the hierarchical representation of the webpage's elements and their relationships. The DOM is a programming interface that represents the structure and content of an HTML or XML document as a tree-like structure, where each element in the document is a node in the tree. When a web page is loaded in a browser, the browser parses the HTML code and constructs the DOM structure based on the elements and tags it encounters. The DOM structure organizes the elements in a tree-like hierarchy, with the root node representing the entire document and child nodes representing the nested elements within the document. The browser takes this DOM tree and shapes it to be read by the assistive technology referred to as screen readers. This modified tree is the Accessibility Tree.

Screen readers, such as JAWS, NVDA, and VoiceOver, translate the underlying accessible code into a perceivable version of it for those who can hear.

There are already visualization libraries such as evoGraphs [1, 2] that provide accessible charts by default but they offer limited interaction, compromise chart customization, only work with certain chart types, require developers to manually describe the charts and to learn a new method of graph creation different from the one they are using. Tools that improve the experience for screen reader users are available but even those lack some features - e.g., there is no standard agreed way to describe a bar chart with Aria-labels - since they follow accessibility guidelines like WCAG that are not fundamentally focused on data visualizations, but instead on the web in general [3, 4].

Olli [5] discloses a Javascript library capable of automatically converting data visualizations into accessible tree-like textual structures for screen reader users. At the top level of this tree are high-level descriptions, navigated using the Up and Down arrow keys, while the detailed data values can be found at the bottom and navigated using the Left and Right arrow keys. The information present in these levels is a description of the chart type and data fields, descriptions of the chart encodings (axes, labels, ...), a breakdown of the data itself, and finally a data table with data filtered according to the user's position in the tree. One of the main downsides of it is the absence of statistical insights on demand, which in some cases compromise the information retrieved by the user.

GPT (Generative Pre-training Transformer) is a family of transformer-based language models created by OpenAI that have shown outstanding performance in various Natural Language Processing (NLP) tasks, including text generation, language translation, and question answering.

In the context of generating descriptions for data visualizations, GPT-like models provide promising results. However, there are still some challenges that need to be addressed. One is to ensure that the generated descriptions are accurate and informative. This is especially important in the context of descriptions produced by GPT-like models which are well known to "hallucinate," i.e., to produce plausible, but false information, fail at basic arithmetic, miscount, or ignore information. Another is to ensure that the descriptions are tailored to the specific needs of the user - two charts could have the same data but different insights depending on their encodings and context.

In the past, generating automatic descriptions has been tried. It is common to see some descriptions, like those from Olli [5] that are created without a human but still rely on template-based approaches, limiting the level of flexibility that a free-text description can provide and the depth of said description by providing only basic statistical insights.

Chart-to-Text [7] authors created their own transformer model capable of generating descriptions that could be considered a mix of levels 3 and 4, that is "Information about Level 3, which provides the 'overall gist' of complex trends and patterns, and Level 4, which requires human perception, cognition, and interpretation, cannot be provided automatically." These descriptions were very limited since they only covered bar and line charts, but also commonly generated factually incorrect statements. Edward Kim et. al [6] also developed a deep-learning model capable of identifying, with great accuracy, the general trend of a line chart into one of six intention categories. This model is also not suitable since it only works with line charts and does not provide a detailed description.

There are other models that use template-based approaches which lack grammatical variations and only reference basic facts through statistical analysis. Some of the approaches include: Datasite, which presents a feed for chart analysis context where some notifications pop up with, between other things, some small textual descriptions, and DataShot [8], which generates a visual fact sheet with multiple charts per theme and a summary on the statistics. However, neither Datasite nor DataShot produce detailed descriptions for multiple data visualization types for GUI charts or provide keyboard navigation, i.e., they are not accessibility focused.

The ChatGPT API released by OpenAI allows users to choose from a series of different models, each with its capabilities, and to choose the temperature between 0 (more accurate and deterministic outputs), and 1 (more diverse but non-deterministic completions). It is also possible to set a maximum number of tokens per response. This is important in order to achieve shorter descriptions that can avoid overwhelming the user and increasing costs.

These facts are disclosed in order to illustrate the technical problem addressed by the present disclosure.

### GENERAL DESCRIPTION

The present document discloses a computer-implemented method for generating textual descriptions for a data chart, comprising the steps of: composing a text prompt comprising a textual instruction to generate a chart description, a data series description, and data from the data chart converted to text format; sending the composed text prompt to a generative pretrained language model, which in particular implementations comprises a generative pre-trained transformer (GPT) language model; and receiving from the language model a generated textual description, wherein the data from the data chart comprises an array or arrays of pairwise keys, i.e., category, and corresponding value datapoints. This array can comprise a textual transcription of the data, i.e., not a computer-readable format as JSON or XML.

In an embodiment, said method for generating textual descriptions for a data chart comprises a plurality of data series, the method comprising the steps of: composing a text prompt comprising a textual instruction to generate a chart description, a data series description for each of the data series, and data from the data chart converted to text format; sending the composed text prompt to a generative pretrained language model, which in particular implementations comprises a generative pre-trained transformer (GPT) language model; receiving from the language model a generated textual description; wherein the data from the data chart comprises, for each data series, an array or arrays of pairwise keys and corresponding value datapoints, wherein the textual instruction to generate a chart description includes a title of the data chart.

In an embodiment, said method for generating textual descriptions for a data chart has one and only one data series, the method comprising the steps of: composing a text prompt comprising a textual instruction to generate a chart description, a data series description, and data from the data chart converted to text format; sending the composed text prompt to a generative pretrained language model, which in particular implementations comprises a generative pre-trained transformer (GPT) language model; receiving from the language model a generated textual description; wherein the data from the data chart comprises an array or array of pairwise keys and corresponding value datapoints, wherein the data series description is a title of the data chart.

In an embodiment, the textual instruction to generate a chart description includes a textual instruction comprising one or more precalculated statistical summaries of the data chart, which in particular implementations comprises a precalculated average of the data series of the data chart - this has been found to avoid incorrect values generated by the model.

In an embodiment, said method further comprises setting a GUI description of the data chart to the received generated textual description.

In an embodiment, said method comprises the subsequent steps of: composing an additional text prompt comprising the received generated textual description and a textual instruction to generate a summary; sending the additional composed text prompt to a generative pretrained language model, which in particular implementations comprises a generative pre-trained transformer (GPT) language model; and receiving from the language model a generated textual summary description. It has been found that having a two-step approach provides better results than a single text prompt making the results better suited to the desired response length.

In an embodiment, said method further comprises a step of setting a GUI description of the data chart to the received generated textual summary description.

In an embodiment, the textual instruction to generate a chart description includes a textual instruction to generate a response below a predetermined character count limit, a predetermined word count limit, or both the predetermined character count limit, a predetermined word count limit. The predetermined character count limit can satisfy a constraint that the results provided are neither too succinct nor too verbose. Further, separately or in combination with other textual instructions, the textual instruction to generate a chart description includes a textual instruction comprising an indication for not using abbreviations.

In an embodiment, the textual instruction to generate a chart description includes a textual instruction to generate a description comprising trends in the data.

In an embodiment, the textual instruction to generate a chart description includes a textual instruction to generate a conclusion and a textual instruction to start said chart description with said conclusion, this has been found to reduce chatter by the generative pre-trained language transformer model, leading to a more linear and efficient focus on the main point.

This disclosure also includes a method for enhancing navigability on a graphical user interface (GUI) comprising GUI elements to be provided on a display, each GUI element having a tab index attribute for keyboard or voice sequential navigation, and the GUI elements comprising a plurality of data charts, each data chart comprising a plurality of data series GUI elements, the method comprising carrying out, by a data processing device comprising a processor, the steps of: loading for displaying on said display a received GUI data structure comprising said GUI elements; clearing or setting the tab index attribute of GUI elements, including button GUI elements, to a value corresponding to a GUI element being non-reachable via sequential keyboard navigation; setting the tab index attribute in each data chart to a value corresponding to a GUI element being reachable via sequential keyboard navigation; receiving one or more user inputs, and for each received user input: if the received user input corresponds to a downward direction, i.e., a 'down' user input, then clearing any tab index attribute from the GUI elements, setting a tab index attribute for each data series GUI element comprised in a focused data chart if GUI user focus is on a focused data chart, and setting focus to a first data series GUI element of the focused data chart; if the received user input corresponds to an upwards direction, i.e., an 'up' user input, then clearing any tab index attribute from the data series GUI elements, setting the tab index attribute in each data chart to a value corresponding to a GUI element being reachable via sequential keyboard navigation, and setting focus to the data chart of a previously focused data series GUI element. In certain implementations, the processor is a hardware processor.

In an embodiment, the user inputs are keystrokes or voice instructions.

In an embodiment, the method is carried out by an assistive data processing device comprising a processor arranged to provide an accessible GUI or a data processing device comprising a processor arranged to provide a voice assistant. In certain implementations, the processor is a hardware processor.

This disclosure also includes a system for enhancing navigability on a graphical user interface, the system comprising: a display for providing GUI elements, a keyboard and/or a microphone for receiving one or more user inputs, and a data processing device comprising a processor arranged to carry out the disclosed method. In certain implementations, the processor is a hardware processor.

This disclosure further includes a non-transitory storage media including program instructions for enhancing navigability on a graphical user interface, the program instructions including instructions executable to carry out the disclosed method.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of a configuration method.
**Figure 2****:** Schematic representation of an embodiment of a method for enhancing navigability on graphical interfaces.
**Figure 3****:** Schematic representation of an embodiment of a navigation method.
**Figure 4****:** Schematic representation of an embodiment of a shortcut index.

### DETAILED DESCRIPTION

The present document discloses a method for enhancing navigability on a graphical user interface (GUI) comprising GUI elements to be provided on a display, each GUI element having a tab index attribute for keyboard or voice sequential navigation, and the GUI elements comprising a plurality of data charts, each data chart comprising a plurality of data series GUI elements. Also disclosed herein is a respective system and non-transitory storage media including program instructions for enhancing navigability on a graphical user interface.

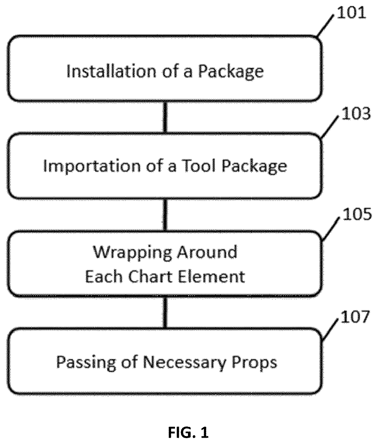

**Figure 1** shows a schematic representation of an embodiment of a configuration method, wherein 101 represents an installation of a package, 103 represents an importation of a tool package, 105 represents a wrapping around each chart element, and 107 represents a passing of the necessary props (example for a bar chart). The installation of a software package 101 and the importation of a tool package 103 can proceed in a conventional manner. The other steps are described further in the paragraphs below. The system includes memory that stores instructions and other information and a hardware processor that executes such instructions. The memory and processor can be part of a server of conventional design.

In particular, data analysts benefit from insights that have to do with overall information that they could gather when visualizing a set of charts.

Insights at a glance include features having to do mainly with descriptions, namely:
- Multi-level descriptions: These have multiple levels, ranging from short and concise, to longer and more detailed, or even visual characteristics of the chart versus statistical facts and trends;
- Rich descriptions: Creating descriptions by executing further instructions in the processor that are more human-like, i.e., sentences that refer to perceptual and cognitive phenomena and are typically written in natural language (as opposed to following a template), or sentences whose semantic content refers to contextual and domain-specific knowledge and experience. They provide insights that lack a precise definition and are often an observation about the data that is complex, deep, qualitative, unexpected, and relevant;
- Change type of descriptions: In the case of multiple levels of descriptions, users are able to change between each of them quickly, e.g., using shortcuts.

In an embodiment, the rich descriptions are generated by executing further instructions in the processor using natural language processing models, for example, comprising RNNs, transformer models and/or reinforcement learning models.

Details on Demand are features that have detailed information about various insights of a chart and that can be called on demand by executing further instructions in the processor and operating on data in a memory, a database, or both, including:
- Data comparison: A way to compare data points against each other and against statistics.
- Statistical insights: Have various shortcuts for statistical insights, e.g., average, maximum, and minimum.
- Data search: The ability to search for specific data points.
- Jump X points: Some way of jumping a determined number of elements, one by default, at a time.
- Content skip: Skip to the end or beginning of the data points inside a chart.
- Chart comparison: Compare statistics across charts.
- Chart awareness: Inform a screen reader user about different types of charts.

User preferences and controls comprise features, stored in memory, a database, or both, and operable by executing further instructions in the processor, that relate to the user's knowledge about the tool and how it changes based on preferences. For instance, the features settable or controllable include:
- Depth change: Ability to navigate on a higher (chart by chart) or lower level (element by element inside a chart);
- Description preference: Allow users to choose the depth (concision or verbosity) of descriptions they prefer to be the default one -for instance, by storing a predetermined character count limit for use during operation of the method and system;

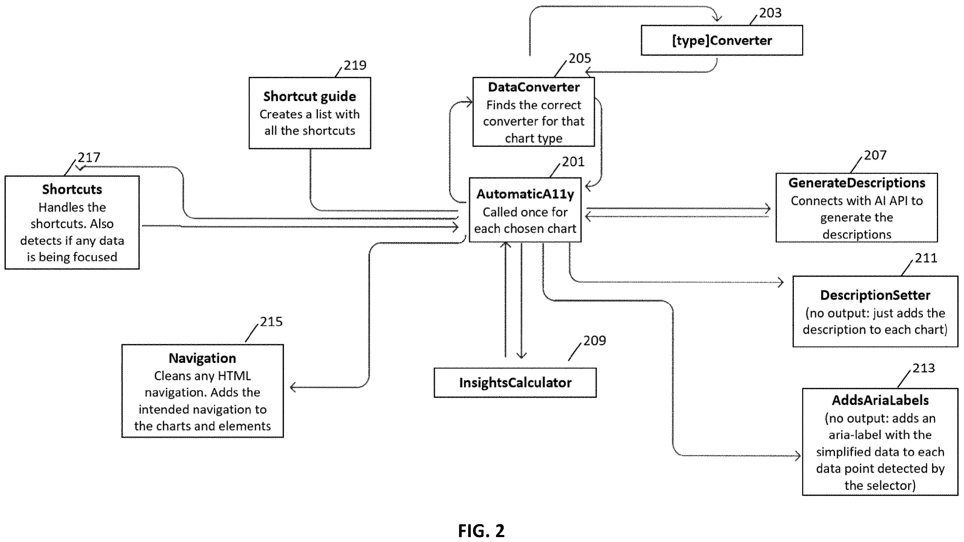

- Shortcut guide 219 (depicted in **Figure 2** discussed further below): Inform the users about all the keys and shortcuts associated with navigation, insights, and descriptions;
- Tool introduction: Warn the user about ideal navigation and tool functionality.

In an embodiment, the method is implemented via a library, namely a react library, stored in memory, a database, or both, for a user to import the component and/or tool package (as referenced in method step 103), which in particular implementations comprise using a Node Package Manager (npm).

In an embodiment, the method comprises a step 105 of wrapping each chart component by executing further instructions in the processor.

The reason the disclosed method, herein named AutoVizuAlly and depicted in **Figure 2** (discussed further below) with the label "AutomaticAlly" as element 201, needs to be executed by executing further instructions in the processor once for each chart visualization is that it requires additional information subjective to that selected chart.

In an embodiment, the method includes the step of accessing the chart stored in memory, a database, or both, and making certain accessibility modifications, e.g., adding shortcuts, enabling navigation, adding descriptions, by executing further instructions in the processor, based on the information passed by the user in the component's props.

Props, as referenced in method step 107, are similar to HTML attributes, in the sense that both provide additional information to the elements. For example, "orientation" associated with each chart (vertical or horizontal) would be written in each description right after the type - since the navigation between elements is always horizontal, saying a chart was "vertical" made the users think the navigation was also improperly vertical for that chart.

In an embodiment, the "title" is also a prop that should be short but still concise with the message of the chart, passing information about the "x" and "y" encodings (e.g. "Transaction per days of the week") by executing further instructions in the processor.

**Figure 2** shows a schematic representation of an embodiment of a method for enhancing navigability on graphical interfaces and the integration of different tools, wherein each action is illustrated schematically and can comprise a module (software) performed by executing further instructions in the processor. The [type]Converter function 203 receives raw data and outputs simplified data and/or array(s) with values; the DataConverter function 205 receives raw data and type and selects the correct [type]Converters; the GenerateDescriptions function 207 receives the title, simplified data and average (calculated by InsightsCalculator function 209), replaces certain fields in a prompt template, send this prompt to a transformer-based model, e.g., OpenAI Generative Pre-trained Transformer models, which then outputs a long and a small description, as soon as the interface with the tool is loaded; the DescriptionSetter function 211 receives chart, title, type, long and small description and adds the correct generated descriptions to the associated charts; the AddsAriaLabels function 213 receives chart, SelectorType and Descriptor and adds information from each data point to the corresponding DOM element' aria-label; the InsightsCalculator function 209 receives an array or arrays with values, calculates statistical insights based on this data, and outputs these insights to be used as outputs of the shortcuts and, in the case of average, used in the descriptions prompts to avoid hallucinations. Other insights could be calculated by this function; the Navigation function 215 receives chart and key pressed event, cleans any previously added navigation, adds navigation to the charts and/or underlying data elements based on the key pressed; and the Shortcuts function 217 receives Key pressed event, type, insights, chart, SelectorType, statistical insights, an array or arrays with values, Title, long and small description, and informs the user about a statistical insight requested through a change in the attribute aria-live of a created DOM element; it also manages the number of data elements to be jumped at a time inside a given chart thus the number output.

In an embodiment, the props, which are added by a user, are: data; selectorType; type; title; context; and autoDescriptions or manualDescriptions (user must choose between one of these last two); optionally, the props may comprise at least one of the following: descriptor; insights; and multiSeries.

Table 1 below has properties that can be accessed and operated upon by executing suitable instructions in the processor. Table 2 has the prop options used in connection with the autoDescriptions stored in memory, a database, or both, that can be accessed and operated upon by executing suitable instructions in the processor. Table 3 has the prop options for the manualDescriptions, which can be stored in memory, a database, or both, and which is operated upon or performed by executing further instructions in the processor.

**Table 1: AutoVizuAlly 201 properties**

| **Property** | **Required/ Optional** | **Type** | **Description** |
|---|---|---|---|
| Data | Required | object | For single series data visualizations, AutoVizuAlly 201 accepts the visualization's data as an object. It is this data that is added as labels to each data element. In the case of multi-series data visualization, each key should be the series identifier, while each value is another object with the visualization data. This is the object that is used in the calculation of the statistical insights. |
| selectorTy pe | Required | object | AutoVizuAlly 201 expects either the HTML type (for example "rect", "circle", or "path") of the data elements or their class name - only one can be chosen. This way, the data elements should be navigable and have an aria-label. AutoVizuA11y 201 assumes that the number of data elements with the specified class or type matches the number of elements passed through the data prop (ensuring that no element is left without a label). |
| Type | Required | string | Accepts a string that specifies the type of data visualization. It gets announced once a data visualization gets focused, after the title and before the descriptions. |
| Title | Required | string | Expect a string containing the title of the visualization, which should be short and concise, showcasing the purpose of the content inside the data visualization. It gets announced once a data visualization gets focused, before the type and the longer or shorter descriptions. |
| Context | Required | string | Requires a string that provides the context in which the data visualization is present. This way, when generating the descriptions, better results are achieved. |
| Descriptor | Optional | string | This Descriptor string is set by the user. This information is subsequently used to place corresponding labels in the computer program. By receiving a string, this descriptor helps better contextualize what data elements are. It gets added at the end of each data element. If no descriptor is provided, blank text (ʺʺ) is set instead. |
| Insights | Optional | boole an | Setting "insights" to false discards the calculations and insights given by AutoVizuA11y 201. The user gets alerted "That shortcut does not work in this chart" in the case of insights being turned off. This is applicable for the shortcuts regarding the minimum, average, and maximum values as well as the other with comparisons to insights and other data points. |
| multiSeries | Optional | boole an | When dealing with multi-series data this should be set to true. This enables the user from navigating between each series on top of the normal navigation. |
| autoDescri ptions | Required (option A) | object | Accepts an object with various options regarding the creation of automatic descriptions with OpenAl models. AutoVizuA11y 201 does two API calls per wrapped visualization, one for each type of description (longer and shorter). This prop cannot be used at the same time as "manualDescriptions". |
| manualDes criptions | Required (option B) | object | Accepts an object with two descriptions. By providing this prop, no automatic descriptions are generated, thus not having any costs associated. This prop cannot be used at the same time as "autoDescriptions". |

**Table 2: The prop options for the autoDescriptions**

| **Keys** | **Required/ Optional** | **Type** | **Description** |
|---|---|---|---|
| Dynamic Descripti ons | Optional | boolean | Setting this to false stops the component from generating the two descriptions for that chart after the first render (the descriptions get saved in local storage). This should be useful for static visualizations. |
| apiKey | Required | string | Accepts a string containing the OpenAI API key so that human-like descriptions of the data visualization can be automatically generated. It is recommended for the developer to take the necessary precautions in order to hide the API key. |
| Model | Optional | string | Accepts a string containing the OpenAI model [9] responsible for generating both descriptions. If no model is provided, gpt-3.5-turbo will be chosen by default. |
| Temperat ure | Optional | number | Accepts a number, from 0 to 1 representing the temperature used in the model [9] responsible for generating both descriptions. Descriptions with temperatures closer to 0 should be more deterministic between API calls while being closer to 1 should be more random between API calls. If no model is provided, 0 will be chosen by default. |

**Table 3: The prop options for the manualDescriptions**

| **Keys** | **Required /Optional** | **Type** | **Description** |
|---|---|---|---|
| Longer | Required | string | Accepts a string with the longer description associated with the wrapped data visualization. |
| Shorter | Required | string | Accepts a string with the shorter description associated with the wrapped data visualization. |

In an embodiment, the data used to generate each chart, which is passed to the disclosed system and method through the data prop by executing further instructions in the processor, can widely vary in structure and will be used in diverse ways to generate charts, translating into different DOM structures that are impossible to foresee. Since the information about a point can be set inside an element in different ways and encodings, the solution is adaptable depending on the code of each chart. By providing the unprocessed data to the disclosed system and method, the aria-labels on each data point are easily written without the need to decipher the contents of the chart. It might seem that this solution puts a heavier burden on the user, but in reality, the data already exists and is being used in the creation of the chart, so the user does not need to go out of their way to get it.

In an embodiment, the data prop is also used to create descriptions. In order to achieve smaller model prompts, the data itself is converted by the DataConverter 205 which operates under control of code executing in a processor in order to convert the data into a smaller, more condensed structure. Smaller prompts reduce costs and increase accuracy by taking out unnecessary or strange elements that might be confusing for GPT.

The prop itself accepts the unprocessed data, independently of their structure, thus being more flexible.

In an embodiment, a {type}Converter 203 for each data structure is used, with the only requirement being to output a dictionary-like structure with keys and values by executing further instructions in the processor.

In an embodiment, the type prop specifies the children component's chart type by executing further instructions in the processor. It affects the setup of aria-labels and is added in the beginning of the descriptions, as shown at block 207. It is through the type prop that the tool understands what data converter to use and how to effectively convert the raw data into a smaller object than the original object. The DescriptionSetter block 211 comprises a module that adds to each chart the description generated by block 207, which in turn connects with an AI application program interface (API) to generate descriptions.

In an embodiment, the type prop value is any string, in particular matching the converter name. For example: if type="barChart" is set then the associated converter file name (and function) is called barConverter. Once that is done, insights can be calculated using the InsightsCalculator 209, which comprises code executing in a processor, and the data can be distributed per element inside an aria-label.

In an embodiment, the type prop, which can be provided by a user, is also put at the beginning of the description, right after the title. Finally, it can be heard in some alerts as the context in which the shortcut is pressed.

In an embodiment, the selectorType prop identifies the chart elements that should be navigable and have a description (aria-label) added to datapoints by the AddsAriaLabels module 213. The developer can either specify the type or class of the elements, like this:

```
    selectorType ={{element:"div"}} or selectorType ={{className:"data"}}.
```

This gives developers some freedom by providing multiple ways to identify the data points independently from the way the charts are implemented code-wise - assuming all data has the same type (element) or class (className).

In an embodiment, the number of data elements identified by this parameter (selectorType) matches the number of elements passed through the data prop, ensuring that no element is left without a label. The selectorType prop improves the tool functionality.

In an embodiment, a title is provided, by a user, for defining the purpose of the content inside the chart. Because the rest of the chart descriptions already do a good job explaining the chart's content, the title can be short but still concise with the message passed.

In an embodiment, the selectorType prop is used to provide context to the screen reader user and to the model that generates the chart descriptions.

In an embodiment, the descriptor prop helps to define what each data point is. For example, it can be in the form descriptor="transactions". The prop value is added to the aria-role of an element and read after each label while the user navigates between elements.

In an embodiment, if no descriptor is provided, blank text ("") is set instead, such as by executing instructions in the processor.

In an embodiment, the insights prop is used when statistical insights could at times not make sense inside a specific chart. The default is to calculate and provide insights using block 209 by executing further instructions in the processor, but setting insights="no" discards both of those things - the user is alerted that the shortcut does not work in that chart when pressing a shortcut in the case of insights being turned off. This is particularly helpful, for example, in a boxplot containing elements whose information is not really data points, but the insights themselves already.

In an embodiment, a guide of shortcuts is provided, preferably associated with pressing the "G" key, then "Alt + H" via ShortcutGuide module 219, which is a module comprising code executing in a processor that enables it to be called up by a user. It is possible to access the guide at any point on a page where the disclosed system and method is present, by pressing "?". Pressing it again or "Esc" makes the user go back to the previously focused chart. The shortcut descriptions inside the guide are categorized using lists, depending on their overall function.

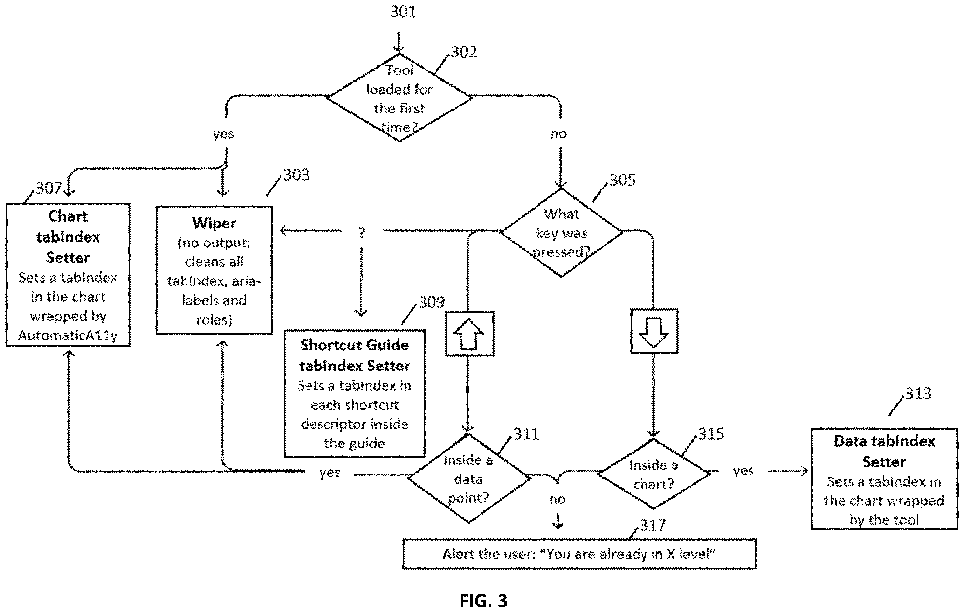

**Figure 3** shows a schematic representation of an embodiment of a navigation method that implements the Navigation module 215, wherein 301 represents navigation, which operates to clean any HTML navigation and add the intended navigation to the charts and elements by executing further instructions in the processor.

In an embodiment, the navigation enables users to navigate between both the charts and the elements inside of them as needed.

In an embodiment, the navigation setting method comprises the following steps:
Loading a page containing elements (e.g., in step 302);
Removing any existing tablndex (e.g., in step 303); and
Setting the tablndex of the buttons to minus one (e.g., in step 307);
Wrapping each data visualization.

In an embodiment, the navigation setting method comprises the following steps when the "down arrow" key is pressed (e.g., in step 305, taking the path on the right side of the flow diagram) to implement the decision at block 315 while focused on one of these wrapped charts:
Wiping all the tablndex attributes from all tool-involved visualizations; and
adding a tablndex (at block 313) to each data element (that matched the selectorType) in the focused chart.

In an embodiment, the navigation setting method comprises the following steps, if the "up arrow" key is pressed while a chart is selected: removing any existing tablndex (e.g., in step 305, taking the path on the left side of the flow diagram) to implement the decision at block 311:
clearing any tab index attribute from the data series GUI elements,
setting the tab index attribute in each data chart to a value corresponding to a GUI element being reachable via sequential keyboard navigation (back at block 307), and
setting focus to the data chart of a previously focused data series GUI element.

Regarding a determination of whether focus remains within a data point (decision 311) or chart (decision 315), the tool listens for key presses if a keyboard's focus is inside the chart. By default, navigation is set between charts, and only the chart(s) have tabindex. If the process is to respond to a down arrow, navigation is cleaned from the chart(s) and elements are added in the chart that is in focus. If the process is to respond to an up arrow, it cleans the navigation from the elements and adds to the chart(s). The tool is configured by code to interpret, through further execution of instructions stored in a processor, whether the focus is in the chart or in the data because it has access to a Document Object Model (DOM) property called "active element". The computer-implemented process, via further execution of instructions stored in the processor, is able to distinguish between the chart and data since the charts have a unique class.

If the decision at blocks 311 or 315 is negative, meaning, the program executing the navigation process 301 determines that the user is not inside a data point or inside a chart, then an alert is provided to the user at block 317, such as "You are already in [X] level, where "X" is either the chart or the data level.

In an embodiment, the navigation between both charts and chart elements is done horizontally, i.e., by using the "left arrow" and "right arrow" keys. This ensures that the user does not get out of a chart/interface into other browser elements, like pressing the "Tab" would do. Still, it is possible to use the "Tab" key to move forward and the "Shift + Tab" key combination to move backward. In this case, the user jumps from one element to the immediate next, so the number of points set to be jumped at a time will not work.

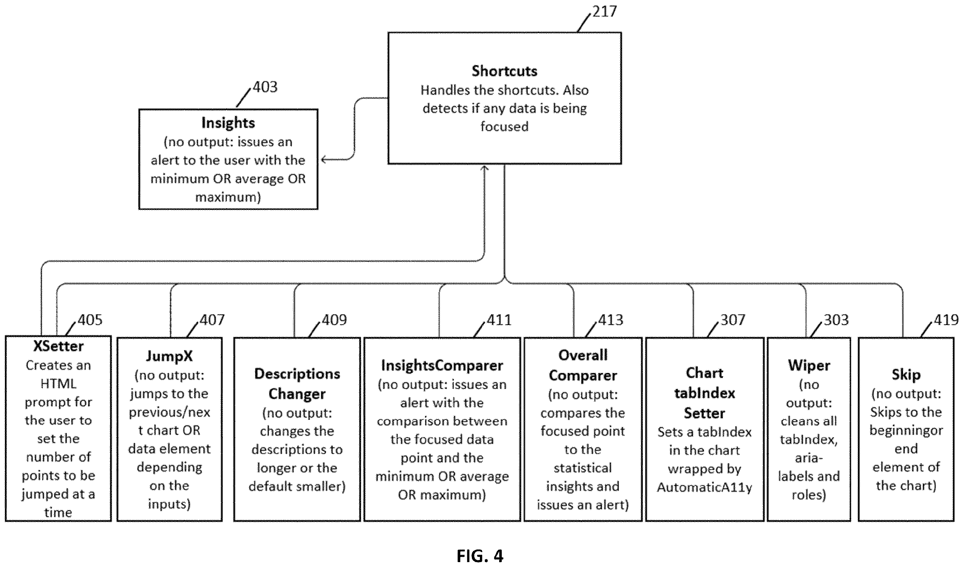

**Figure 4** shows a schematic representation of an embodiment of a shortcut index, which implements the Shortcuts module 217.

In a further embodiment, a user can also move inside each chart using shortcuts, as handled by the Shortcuts module 217. It is possible to jump to the first ("Alt (option) + Q" or "Home") and last element ("Alt (option) + W" or "End") via, e.g., Skip 419, avoiding the need to go through every point to reach either side. The process of Fig. 4 responds to such user inputs within each chart as described next.

In an additional embodiment, a user defines the number of points they want to jump at a time via, e.g., XSetter 405. This can be done by pressing "Alt (option) + X". After pressing this key combination, a prompt appears saying "Enter a number above 0". This number is defined per chart, does not influence others, and is kept even after leaving the given chart. It is also possible to change this number using the "+" key via JumpX 407 to add one to the number of points to be jumped or using "-" key to subtract one.

Various insights are gathered from a set of charts by call and write functions to memory and by executing further instructions in the processor that implements the Insights module 403 - this information is not accessible to visually impaired users and analysing it would require them to take the datasets to other platforms like Excel and do the necessary calculations themselves. The disclosed system and method interprets these insights based on the data provided.

In an embodiment, at any moment while focused on a chart or an element inside of it, the user can ask for the following:
Minimum value: "Alt + J";
Average value: "Alt + K";
Maximum value: "Alt + L".

All these three shortcuts utilized in Insights 403 make the screen reader announce, using aria-live="assertive", the following: "The [insight] is [value]", for example, "The minimum value is: 5," by executing further instructions in the processor.

In another embodiment, while inside a chart and focused on an element, it is also possible to:
Compare current point to minimum value 411: "Alt + Shift + J";
Compare current point to average 411: "Alt + Shift + K";
Compare current point to maximum value 411: "Alt + Shift + L";
How a point compares to the rest of the chart 413: "Alt + Z".

For example, in this case, the first three shortcuts 411 make the screen reader announce, using aria-live= "assertive", "The value is [difference] [X] the [insight]" where X can be "bellow", "above" and "the same as," by executing further instructions in the processor., In this last case no difference is given, such as "This value is 3.14 above the average". The last shortcut 413 announces the position of the data point in relation to the rest in that chart, either saying "This is the {maximum OR minimum OR median} value", or "This is the [ordinal numeral] {highest OR lowest} value". Example: "This is the lowest value" or "This is the 3rd highest value". Shortcuts Wiper 303 and Chart tablndex Setter 307 operate similarly to Fig. 3.

The present document also discloses a method for providing accurate and meaningful descriptions via, e.g., Descriptions Changer 409. By giving a summary with the main takeaway points from data visualization by executing further instructions in the processor, the method ensures that the user has an overall idea of what to expect when navigating the data more closely.

In an embodiment, the description is a template format where data and insights would replace the intended position in a standardized phrase (mix of levels 1 and 2).

In another embodiment, the description uses a GPT API to generate level 3 and 4 descriptions, achieving a human-like summary.

In an embodiment, the description method includes code that executes and cause the following steps to be performed by the Descriptions Changer module 409:
creating a longer description without length boundaries and assigning it to the "Alt (option) + B" shortcut;
creating a shorter description through a summarization of the longer description; once the longer and shorter descriptions are generated, the shorter one (which should have the crucial information about the chart) is set by default, right after the title and type of visualization. It can also be set using the "Alt (option) + S" key if it is not already.

In an embodiment, the final prompts sent by executing further instructions in the processor to a transformer-based language model, e.g., the OpenAl's gpt-3.5-turbo and/or text-davinci-003 models, are respectively similar to the following:
Longer description: "Knowing that the chart below is from a user's bank account dashboard and the data represents [title] with an average of [average], make a description (do not use abbreviations) with the trends in the data, starting with the conclusion: [dataConverted]";
Shorter description: "Make a 300 maximum characters summary of the following description: [longer description]".

The following list of criteria was set as success criteria:
Obeys size: The size given is respected even if it exceeds by a few characters;
Correct output: The model does not come up with wrong information, like the average;
No repeated information: In the same description, the same information is not repeated;
No abbreviations: The model does not produce abbreviations like "txn" (transaction) or# (number);
No wrong assumptions: The model does not assume wrongly, for example, the first day seen in the data;
No missing information: The description does not lack relevant information, like clear outliers;
Fluid description: Everything is written in a fluid human-like way, like a story;
No breaks: There are no sudden breaks mid-sentence at the end of the description.

Before starting to test the API, it was important to have a sense of whether or not this was the right path. To settle this decision, various prompts were run through the GPT website until it gave an acceptable response, meaning, a response that satisfies the prescribed criteria such as outlined above.

In the first iteration of this journey, the focus was on two descriptions: visual description and the data description.

In an embodiment, the visual description was created using a template, considered level 1, with some superficial information about the chart and data.

This is a [chart orientation] [chart type] with the x-axis representing [x axis encodings] and the y-axis representing [y axis encodings], containing a total of [number of data points].

In an embodiment, the data description was created using a GPT model. The prompt passed to the GPT model has a description for context, the average of the data, in case it is needed, and the raw data itself. Additionally, passed to the GPT model is an instruction to make a detailed description for each of the global trends found in the data since it is the intended outcome and also an instruction setting some boundaries to the generated text, e.g., 300 characters and/or 60 words maximum. The prompt:
"Knowing that [first description] (the users already know this information) and the average is [average], make a description (300 characters and/or 60 words maximum) with 1 phrase for each: global trends (more detailed), maximum value (short), and minimum value (short), [data]".

Example of output:
"Global trends: The barchart shows a bimodal distribution, with peaks at 10am and 7pm, and low activity during the night and early morning. Maximum value: The highest transaction count occurred at 7pm, with 22 transactions. Minimum value: The lowest transaction counts occurred between 4am to 9am, with no transactions recorded during some hours."

In another embodiment, only changes were made to the Data description prompt. Asking for a phrase for global trends, maximum and minimum was distributing the response evenly by the three - the idea was to give more emphasis on global trends. The prompt became this:
"Knowing that [first description] (the users already know this information) and the average is [average], make a detailed description (300 characters and/or 60 words maximum) with the global trends: [data]".

For example: "The chart shows low activity during the early morning and evening hours, with most transactions occurring during midday and early afternoon. The highest peak occurs at 19:00, with 22 transactions, indicating a strong demand during the evening. There is also a smaller peak at 10:00 with 10 transactions, possibly due to an increase in business-related transactions. The average of 3.38 suggests that overall, the hourly transaction count is relatively low.".

In an embodiment, the data description uses a GPT model, e.g., the gpt-3.5-turbo for both short and long descriptions, preferably with the temperature of 0.1 and no token restrictions.

To avoid the use of an entire JSON object that is passed at the end of the prompt, attention was paid to avoiding introducing unnecessary white spaces, tabs, and terms that at times could mislead the model. As an example, in the heatmap where the structure did not indicate what bin corresponded to the day of the week, the model assumed that the day started on a Sunday instead of Monday giving responses that did not match the actual insights. Because of this, the data converter module 205 was introduced into the process, as discussed above.

In an embodiment, data converter 205 converts the data structure of each chart into a dictionary structure, for example "Mon":1, "Tue":7, "Wed":2, "Thu":2, "Fri":2, "Sat":2, "Sun":2.

Other details that changed in this prompt were phrasing, and the chart type was cut so that the model just focused on the data itself and not the chart - the type is read by the screen reader before the description itself. In an example, the prompt is:
"Knowing that the data below represents the [y encoding] per [x encoding] with an average of [average], make a description with the trends in the data: [data]".

And gave responses like these:
"The data shows that there are low transaction numbers during the early morning hours (0-5) and during the afternoon (11-14 and 18-20). However, there is a significant increase in transactions during the morning rush hour (9-10) and in the evening (17-22), with the highest number of transactions occurring at 19. Overall, the average number of transactions per hour is 3.38.".

In an embodiment, the information in both shorter and longer descriptions are similar in structure but vary in the amount of details conveyed. The idea is to, by default, provide a shorter description for each chart as soon as the user arrives at it, with the main insights to be taken, and provide an optional longer description with more detailed information. The modules described hereinabove attend to this task.

In another embodiment, the conclusion was asked to be stated first for giving the key idea of the information to follow in the longer description.

Even if theoretically davinci was just a more expensive version of gpt-3.5-turbo, it presented better results when tasked with creating a certain size summary of a description.

In an embodiment, the following prompts were used for creating the AutoVizuAlly 201 descriptions whose prompts consistently passed all success criteria for all chart examples created: for the longer description prompt: "Knowing that the data below represents the [y encoding] per [x encoding] with an average of [average], make a description with the trends in the data, starting with the conclusion: [data]", for the shorter description prompt: "Make a 300 maximum characters summary of the following description: [longer description]".

In a further embodiment, the previous prompts further comprise the sentence "Knowing that the chart below is from a user's bank account dashboard and the data represents...". This change is very specific to the context in which the interface was presented to the users in the tests. This solution is not modular as it is but easily changed to a tool prop, for example. Since the context in which the tool will primarily be used is unique and final, the context of data analysis could also just be "hard coded" in place of the one provided.

The [x encoding] and [y encoding], which came directly from the tools props, were both changed to a single new prop ("title").

In an embodiment, the components comprise: descriptions, navigation 301, and shortcuts 217. Wherein the descriptions connect with the GPT API to generate the chart descriptions, the navigation applies navigation functionality and aria labels, and the shortcuts implement the pool of shortcuts available in the tool.

In an embodiment, the method comprises at least one of the functions in connection with the generation of textual descriptions for a data chart, enhancing navigability within a graphical user interface, or both:
data converters 205: set data converters that simplifies the structure of the data objects (tool provides one out-of-the-box for each chart type);
Insights calculator 209: calculate insights like min, max, avg and sum;
Math: more complex math like the median and ordinal numbers;
Wiper 303: function to remove navigation features from the chart (removes aria-labeles, aria-labeledby, aria-describedby, button navigation, and tablndex).

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

### References

[1] Ather Sharif, Sanjana Shivani Chintalapati, Jacob O Wobbrock, and Katharina Reinecke. Understanding screen-reader users' experiences with online data visualizations. pages 1-16. ACM, 2021.
[2] EvoXLabs. evographs. http://evoxlabs.org/projects/evographs, 2015. Accessed: 2022-12-30.
[3] N W Kim, S C Joyner, A Riegelhuth, and Y Kim. Visualization accessibility in the wild: Challenges faced by visualization designers. pages 1-19. ACM, 2022.
[4] Frank Elavsky, Cynthia Bennett, and Dominik Moritz. How accessible is my visualization? evaluating visualization accessibility with chartability. Computer Graphics Forum, 41:57-70, 2022.
[5] Matthew Blanco, Jonathan Zong, and Arvind Satyanarayan. Olli: An extensible visualization library for screen reader accessibility. https://vis.csail.mit.edu/pubs/olli/
[6] Edward Kim and Kathleen F. McCoy. Multi modal deep learning using images and text for information graphic classification. ASSETS 2018 - Proceedings of the 20th International ACM SIGACCESS Conference on Computers and Accessibility, pages 143-148, 10 2018.
[7] Jason Obeid and Enamul Hoque. Chart-to-text: Generating natural language descriptions for charts by adapting the transformer model. pages 15-18.
[8] Yun Wang, Zhida Sun, Haidong Zhang, Weiwei Cui, Ke Xu, Xiaojuan Ma, and Dongmei Zhang. Datashot: Automatic generation of fact sheets from tabular data. IEEE Transactions on Visualization and Computer Graphics, 26:895-905, 1 2020
[9] Models. OpenAI. https://platform.openai.com/docs/models/overview. Accessed: 2023-09-11.

## Claims

1. A computer-implemented method for generating textual descriptions for a data chart, comprising the steps of:
composing a text prompt comprising a textual instruction to generate a chart description, a data series description, and data from the data chart converted to text format;
sending the composed text prompt to a generative pretrained language model; and
receiving from the language model a generated textual description,
wherein the data from the data chart comprises an array or arrays of pairwise keys and corresponding value datapoints.

2. The method according to the previous claim for generating textual descriptions for a data chart comprising a plurality of data series, the method further comprising the steps of:
composing a text prompt comprising a textual instruction to generate a chart description, a data series description for each of the data series, and data from the data chart converted to text format;
sending the composed text prompt to a generative pretrained language model; and
receiving from the language model a generated textual description,
wherein the data from the data chart comprises, for each data series, an array or arrays of pairwise keys and corresponding value datapoints, and
wherein the textual instruction to generate a chart description includes a title of the data chart.

3. The method according to claim 1 for generating textual descriptions for a data chart having one and only one data series, the method further comprising the steps of:
composing a text prompt comprising a textual instruction to generate a chart description, a data series description, and data from the data chart converted to text format;
sending the composed text prompt to a generative pretrained language model; and
receiving from the language model a generated textual description,
wherein the data from the data chart comprises an array or arrays of pairwise keys and corresponding value datapoints, and
wherein the data series description is a title of the data chart.

4. The method according to any of the previous claims wherein the textual instruction to generate a chart description includes a textual instruction comprising one or more precalculated statistical summaries of the data chart.

5. The method according to any of the previous claim further comprising setting a GUI description of the data chart to the received generated textual description.

6. The method according to the previous claim 5, further comprising the subsequent steps of:
composing an additional text prompt comprising the received generated textual description and a textual instruction to generate a summary;
sending the additional composed text prompt to a generative pretrained language model; and
receiving from the language model a generated textual summary description.

7. The method according to the previous claim 6, further comprising a step of setting a GUI description of the data chart to the received generated textual summary description.

8. The method according to the claims 6-7, wherein the textual instruction to generate a chart description includes a textual instruction to generate a response below a predetermined character count limit, a predetermined word count limit, or both the predetermined character count limit, a predetermined word count limit.

9. The method according to any of the previous claims, wherein the textual instruction to generate a chart description includes a textual instruction to generate a description comprising trends in the data.

10. The method according to any of the previous claims, wherein the textual instruction to generate a chart description includes a textual instruction to generate a conclusion and a textual instruction to start said chart description with said conclusion.

11. A computer-implemented method for enhancing navigability on a graphical user interface (GUI) comprising GUI elements to be provided on a display, each GUI element having a tab index attribute for keyboard or voice sequential navigation; the GUI elements comprising a plurality of data charts, each data chart comprising a plurality of data series GUI elements; the method comprising carrying out, by a data processing device comprising a processor, the steps of:
loading for displaying on said display a received GUI data structure comprising said GUI elements;
clearing or setting the tab index attribute of GUI elements, including button GUI elements, to a value corresponding to a GUI element being non-reachable via sequential keyboard navigation;
setting the tab index attribute in each data chart to a value corresponding to a GUI element being reachable via sequential keyboard navigation;
receiving one or more user inputs, and for each received user input:
if the received user input corresponds to a downward direction, then clearing any tab index attribute from the GUI elements, setting a tab index attribute for each data series GUI element comprised in a focused data chart if GUI user focus is on a focused data chart, and setting focus to a first data series GUI element of the focused data chart;
if the received user input corresponds to an upwards direction, then clearing any tab index attribute from the data series GUI elements, setting the tab index attribute in each data chart to a value corresponding to a GUI element being reachable via sequential keyboard navigation, and setting focus to the data chart of a previously focused data series GUI element.

12. The method according to the previous claim wherein the user inputs are keystrokes or voice instructions.

13. The method according to any of the previous claims wherein the method is carried out by an assistive data processing device comprising a processor arranged to provide an accessible GUI or a data processing device comprising a processor arranged to provide a voice assistant.

14. A system for enhancing navigability on a graphical user interface, the system comprising: a display for providing GUI elements, a keyboard and/or a microphone for receiving one or more user inputs, and a data processing device comprising a processor arranged to carry out the method of any of the previous claims 1-13.

15. A non-transitory storage media including program instructions for enhancing navigability on a graphical user interface, the program instructions including instructions which when executed by a data processing device comprising a processor cause it to carry out the method of any of the claims 1-13.
